(19) Europäisches Patentamt
European Patent Office
Office européen des brevets

(11) **EP 1 220 877 B1**

(12) **EUROPÄISCHE PATENTSCHRIFT**

(45) Veröffentlichungstag und Bekanntmachung des Hinweises auf die Patenterteilung:
**15.12.2004 Patentblatt 2004/51**

(21) Anmeldenummer: **00964027.7**

(22) Anmeldetag: **22.08.2000**

(51) Int Cl.$^7$: **C08K 5/5353**, C08K 5/5357

(86) Internationale Anmeldenummer:
**PCT/EP2000/008161**

(87) Internationale Veröffentlichungsnummer:
**WO 2001/018118 (15.03.2001 Gazette 2001/11)**

(54) **FLAMMWIDRIGE POLYCARBONAT-BLENDS**

FLAME-RESISTANT POLYCARBONATE ABS MOULDING MATERIALS

MELANGES DE POLYCARBONATE RETARDATEURS DE FLAMME

(84) Benannte Vertragsstaaten:
**AT BE CH CY DE DK ES FI FR GB GR IE IT LI LU MC NL PT SE**

(30) Priorität: **02.09.1999 DE 19941827**

(43) Veröffentlichungstag der Anmeldung:
**10.07.2002 Patentblatt 2002/28**

(73) Patentinhaber: **Bayer MaterialScience AG
51368 Leverkusen (DE)**

(72) Erfinder:
- **ZOBEL, Michael
50823 Köln (DE)**
- **ECKEL, Thomas
41540 Dormagen (DE)**
- **DERR, Torsten
41542 Dormagen (DE)**
- **WITTMANN, Dieter
51375 Leverkusen (DE)**

(56) Entgegenhaltungen:
**EP-A- 0 594 553**
**EP-A- 0 640 655**
**US-A- 4 054 544**
**US-A- 5 844 028**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft mit Phosphonataminen und Phosphorverbindungen ausgerüstete Polycarbonat-ABS-Blends, die einen ausgezeichneten Flammschutz und sehr gute mechanische Eigenschaften wie Bindenahtfestigkeit oder E-Modul und einen guten Rohton aufweisen.

US-P 4 073 767 und 5 844 028 beschreiben cyclische Phosphorverbindungen einschließlich Phosphorinan-Ringe als geeignete Flammschutzmittel für Polyurethane, Polycarbonate, Polyester und Polyamide. In US-P 4 397 750 werden bestimmte cyclische Phosphonatester als effiziente Flammschutzmittel für Polypropylen und andere Polyolefine beschrieben. In US-P 5 276 066 undUS-P 5 844 028 werden bestimmte (1,3,2-Dioxaphosphorinanmethan) -Amine beschrieben, die geeignete Flammschutzmittel für Polyurethane, Polyester, Styrolpolymere, PVC, PVAc oder Polycarbonat darstellen.

US-P 3 505 431, FR-P 1 371 139, US-P 3 711 577, US-P 4 054 544 beschreiben acyclische Trisphosphonatamine, die z.T. halogeniert sind.

In EP-A 0 640 655 werden Formmassen aus aromatischem Polycarbonat, styrolhaltigen Copolymerisaten und Pfropfpolymerisaten beschrieben, die mit monomeren und/oder oligomeren Phosphorverbindungen flammwidrig ausgerüstet werden können.

In EP-A 0 363 608 werden flammwidrige Polymermischungen aus aromatischem Polycarbonat, styrolhaltigem Copolymer oder Pfropfcopolymer sowie oligomeren Phosphaten als Flammschutzadditve beschrieben. Für manche Anwendungen, wie beispielsweise Formteile im Innern von Gehäuseteilen, ist die Wärmeformbeständigkeit dieser Mischungen oft nicht ausreichend.

In US-P 5 061 745 werden Polymermischungen aus aromatischem Polycarbonat, ABS-Pfropfpolymerisat und/oder styrolhaltigem Copolymer und Monophosphaten als Flammschutzadditive beschrieben. Zur .Herstellung dünnwandiger Gehäuseteile ist das Niveau der Spannungsrissbeständigkeit dieser Mischungen oft nicht ausreichend.

Eine Kombination aus Phosphonataminen und Phosphorverbindungen wird weder in WO 9740092 noch in EP-A 728 811 beschrieben.

Aufgabe der vorliegenden Erfindung ist die Bereitstellung von Polycarbonat-Formmassen mit einer verbesserten Flammfestigkeit durch verbesserte Nachbrennzeiten und ausgezeichneten mechanischen Eigenschaften wie Bindenahtfestigkeit, E-Modul sowie einer guten Verarbeitbarkeit und Rohton. Dieses Eigenschaftsspektrum wird besonders bei Anwendungen im Bereich Datentechnik wie etwa für Gehäuse von Monitoren, Druckern, Printern, Kopierern usw. gefordert.

Es wurde nun gefunden, dass Zusammensetzungen, die Polycarbonat und Phosphonatamine in Kombination mit Phosphorverbindungen und/oder Salzen von Phosphatverbindungen und gegebenenfalls weiteren Blendpartnern enthalten, die gewünschten Eigenschaften aufweisen.

Gegenstand der Erfindung sind daher Zusammensetzungen enthaltend Polycarbonat, mindestens ein Phosphonatamin der Formel (I)

$$A_{3-y}\text{-N-}B_y \quad \text{(I)},$$

in welcher

A für einen Rest der Formel (IIa)

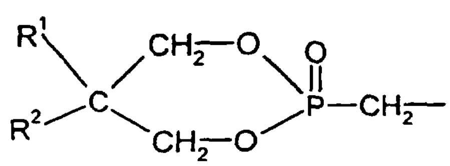

(IIa)

oder (IIb)

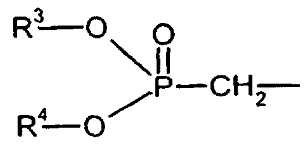

(IIb)

steht,

R1 und R2 unabhängig voneinander für unsubstituiertes oder substituiertes $C_1$-$C_{10}$-Alkyl oder für unsubstituiertes oder substituiertes $C_6$-$C_{10}$-Aryl, stehen,

R3 und R4 unabhängig voneinander für unsubstituiertes oder substituiertes $C_1$-$C_{10}$-Alkyl oder unsubstituiertes oder substituiertes $C_6$-$C_{10}$-Aryl stehen oder

R3 und R4 zusammen für unsubstituiertes oder substituiertes $C_3$-$C_{10}$-Alkylen stehen,

y die Zahlenwerte 0, 1 oder 2 bedeuten und

B unabhängig für Wasserstoff, gegebenenfalls halogeniertes $C_2$-$C_8$-Alkyl, unsubstituiertes oder substituiertes $C_6$-$C_{10}$-Aryl steht,

und mindestens eine Phosphorverbindung der Formeln (IIa), (IIb), (IIc) und (IId)

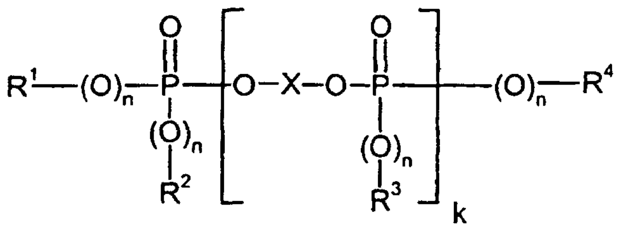

(IIa),

worin

$R^1$, $R^2$, $R^3$ und $R^4$, unabhängig voneinander jeweils gegebenenfalls halogeniertes $C_1$- bis $C_8$-Alkyl, jeweils gegebenenfalls durch Alkyl, vorzugsweise $C_1$-$C_4$-Alkyl, und/oder Halogen, vorzugsweise Chlor, Brom, substituiertes $C_5$- bis $C_6$-Cycloalkyl, $C_6$- bis $C_{20}$-Aryl oder $C_7$- bis $C_{12}$-Aralkyl stehen,

n unabhängig voneinander, 0 oder 1

k 0 bis 30 und

X einen ein- oder mehrkernigen aromatischen Rest mit 6 bis 30 C-Atomen bedeuten,

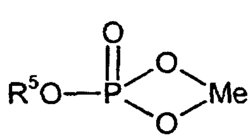

(IIb)

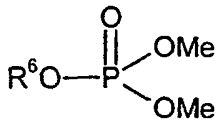

(IIc)

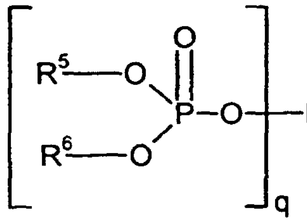

(IId)

worin

$R^5$ und $R^6$ unabhängig voneinander, gegebenenfalls halogeniertes $C_1$-$C_{24}$-Alkyl, jeweils gegebenenfalls durch Halogen und/oder $C_1$-$C_{10}$-Alkyl substituiertes $C_5$-$C_6$-Cycloalkyl, $C_6$-$C_{20}$-Aryl oder $C_7$-$C_{12}$-Aralkyl bedeuten,

oder

$R^5$ und $R^6$ im Falle der Formel (IId) eine Alkyl-Kette, vorzugsweise mit bis zu 6, insbesondere 2 oder 3 Kohlenstoffatomen bilden,

Me für ein Metall, ausgewählt aus der 1. bis 3. Hauptgruppe und VIII, 1B und 2B der Nebengruppe des Periodensystems steht,

und q durch die Wertigkeit des Metallions bestimmt wird,

und gegebenenfalls Schlagzähmodifikatoren.

Die erfindungsgemäße Zusammensetzung enthält vorzugsweise 0,1 bis 30, besonders bevorzugt 1 bis 25, ganz besonders bevorzugt 2 bis 20 Gew.-Teile Phosphonatamin und vorzugsweise 0,5 bis 20, besonders bevorzugt 1 bis 18, insbesondere 2 bis 15 Gew.-Teile Phosphorverbindung, wobei die Mengenangaben bezogen sind auf die Gesamtmischung.

Vorzugsweise enthalten die Zusammensetzungen als Schlagzähmodifikator Pfropfpolymerisat und gegebenenfalls Vinyl(co)polymerisat und/oder Polyalkylenterephthalat.

Gegenstand der Erfindung sind vorzugsweise Blends enthaltend

A) 40 bis 99, vorzugsweise 60 bis 98,5 Gew.-Teile aromatisches Polycarbonat und/oder Polyestercarbonat

B) 0,5 bis 60, vorzugsweise 1 bis 40, insbesondere 2 bis 25 Gew.-Teile Pfropfpolymerisat von

B.1) 5 bis 95, vorzugsweise 30 bis 80 Gew.-% eines oder mehrerer Vinylmonomeren auf

B.2) 95 bis 5, vorzugsweise 20 bis 70 Gew.-% einer oder mehrerer Pfropfgrundlagen mit einer Glasumwandlungstemperatur <10°C, vorzugsweise <0°C, besonders bevorzugt < -20°C,

C) 0 bis 45, vorzugsweise 0 bis 30, besonders bevorzugt 2 bis 25 Gew.-Teile mindestens eines thermoplastischen Polymers, ausgewählt aus der Gruppe der Vinyl(co)polymerisate und Polyalkylenterephthalate,

D) 0,1 bis 30 Gew.-Teile, vorzugsweise 1 bis 25 Gew.-Teile, besonders bevorzugt 2 bis 20 Gew.-Teile Phosphonatamin der oben beschriebenen Formel (I)

E) 0,5 bis 20 Gew.-Teile, vorzugsweise 1 bis 18 Gew.-Teile, besonders bevorzugt 2 bis 15 Gew.-Teile, ausgewählt aus mindestens einer Phosphorverbindung der oben beschriebenen Formeln (IIa), (IIb), (IIc) und (IId),

F) 0 bis 5, vorzugsweise 0,1 bis 3, besonders bevorzugt 0,1 bis 1 Gew.-Teile, insbesondere 0, 1 bis 0,5 Gew.-Teile fluoriertes Polyolefin,

wobei die Summe der Gew.-Teile der Komponenten 100 ergibt.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigem, beispielsweise Triphenolen oder Tetraphenolen.

Diphenole zur Herstellung der aromatischen Polycarbonate und/oder aromatischen Polyestercarbonate sind vorzugsweise solche der Formel (III)

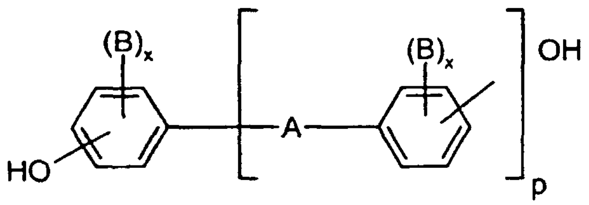

(III),

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, $-SO_2-$, $C_6$-$C_{12}$-Arylen, an das weitere aromatische gegebenenfalls Heteroatome enthaltende Ringe kondensiert sein können, oder ein Rest der Formel (IV) oder (V)

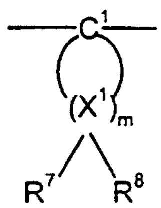

(IV)

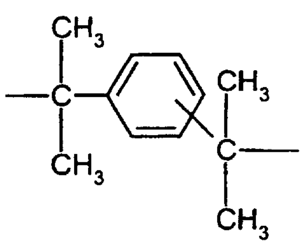

(V)

B jeweils $C_1$-$C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^7$ und $R^8$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einen Atom $X^1$, $R^7$ und $R^8$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxylphenyl)-sulfoxide, Bis-(hydroxyphenyl)-ketone. Bis-(hydroxyphenyl)-sulfone und $\alpha,\alpha$-Bis-(hydroxyphenyl)-diisopropyl-benzole sowie deren kembromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenyl-sulfon sowie deren di- und tetrabromierten oder chlorierten Derviatc wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A) können auch 1 bis 25 Gew.-%, vorzugsweise 2,5 bis 25 Gew.-% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechem beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-berizol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

__**Komponente B**__

Die Komponente B umfasst ein oder mehrere Pfropfpolymerisate von

B.1 5 bis 95, vorzugsweise 30 bis 80 Gew.-%, wenigstens eines Vinylmonomeren auf

B.2 95 bis 5, vorzugsweise 70 bis 20 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße ($d_{50}$-Wert) von 0,05 bis 5 µm, vorzugsweise 0,10 bis 0,5 µm, besonders bevorzugt 0,20 bis 0,40 µm.

Monomere B.1 sind vorzugsweise Gemische aus

B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-($C_1$-$C_4$)-Alkylester (wie z.B. Methylmethacrylat, Ethylmethacrylat) und

B.1.2 1 bis 50 Gew.-Teilen Vinylcyanide (ungesättigte Nitrile wie Acrylnitril und Methacrylnitril) und/oder (Meth)Acrylsäure-($C_1$-$C_8$)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb <10°C, vorzugsweise <0°C, besonders bevorzugt < -10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

## Komponente C

Die Komponente C umfasst ein oder mehrere thermoplastische Vinyl (co)polymerisate C.1 und/oder Polyalkylenterephthalate C.2.

Geeignet sind als Vinyl(co)Polymerisate C.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

C.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-($C_1$-$C_8$)-Alkylester wie z.B. Methylmethacrylat, Ethylmethacrylat), und

C.1.2 1 bis 50, vorzugsweise 20 bis 40 Gew.-Teilen Vinylcyanide (ungesättigte Nitrile) wie Acrylnitril und Methacrylnitril und/oder (Meth)Acrylsäure-($C_1$-$C_8$)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate C.1 sind harzartig, thermoplastisch und kautschukfrei.

Besonders bevorzugt ist das Copolymerisat aus C.1.1 Styrol und C.1.2 Acrylnitril.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise Molekulargewichte $\overline{M}_w$ (Gewichtsmittel, ermittelt durch Lichtstreuung oder Sedimentation) zwischen 15 000 und 200 000.

Die Polyalkylenterephthalate der Komponente C.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxyphenyl)-propan und 2,2-Bis-(4-hydroxypropoxyphenyl)-propan (DE-OS 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

## Komponente D

Die erfindungsgemäßen Formmassen enthalten als Flammschutzmittel wenigstens eine Phosphonatamin-Verbindung der Formel (I)

$$A_{3-y}NB_y \qquad (I),$$

in welcher

A für

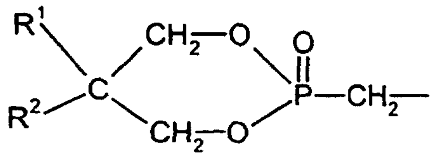

oder

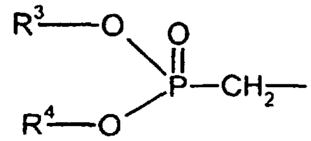

steht,
wobei

$R^1$, $R^2$, $R^3$ und $R^4$ sowie B und y die oben angegebene Bedeutung haben.

B steht vorzugsweise unabhängig für Wasserstoff, für Ethyl, n- oder iso-Propyl, welche durch Halogen substituiert sein können, unsubstituiertes oder durch $C_1$-$C_4$-Alkyl und/oder Halogen substituiertes $C_6$-$C_{10}$-Aryl, insbesondere Phenyl oder Naphthyl.

Alkyl in $R^1$, $R^2$, $R^3$ und $R^4$ steht unabhängig vorzugsweise für Methyl, Ethyl, n-Propyl, iso-Propyl, n-, iso-, sec. oder tert. Butyl, Pentyl oder Hexyl.

Substituiertes Alkyl in $R^1$, $R^2$, $R^3$ und $R^4$ steht unabhängig vorzugsweise für durch Halogen substituiertes $C_1$-$C_{10}$-Alkyl, insbesondere für ein- oder zweifach substituiertes Methyl, Ethyl, n-Propyl, iso-Propyl, n-, iso-, sec. oder tert.-Butyl, Pentyl oder Hexyl.

$R^3$ und $R^4$ bilden zusammen mit dem Kohlenstoff, an das sie gebunden sind, vorzugsweise Cyclopentyl, Cyclohexyl, Cycloheptyl oder Cyclooctyl, insbesondere Cyclopentyl oder Cyclohexyl.

$C_6$-$C_{10}$-Aryl steht in $R^1$, $R^2$, $R^3$ und $R^4$ unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

Beispielhaft und vorzugsweise werden genannt: 5,5,5',5',5'',5''-Hexamethyl-tris(1,3,2-dioxaphosphorinan-methan)amin-2,2',2''-trioxid der Formel (I-1)

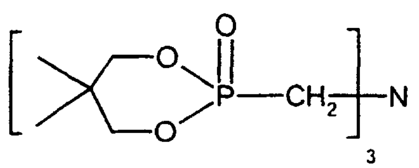

(I-1)

(Versuchsprodukt XPM 1000 Fa. Solutia Inc., St. Louis, USA)
1,3,2-Dioxaphosphorinan-2-methanamin, N-butyl-N[(5,5-dimethyl-1,3,2-dioxaphosphorinan-2-yl)methyl]-5,5-dimethyl-, P,2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-di-chloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-dichloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

Bevorzugt sind weiterhin:

Verbindungen der Formel (I-2) oder I-3)

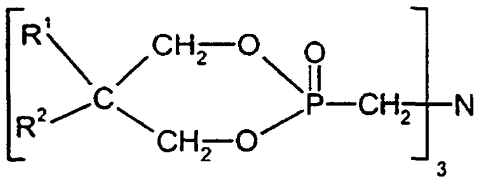

(I-2)

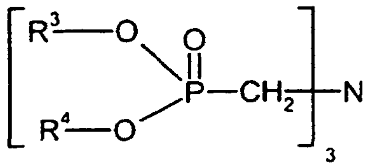

(I-3)

wobei
$R^1$, $R^2$, $R^3$ und $R^4$ die oben angegebenen Bedeutungen haben.

Besonders bevorzugt sind Verbindungen der Formel (I-2), (I-1). Besonders bevorzugt sind auch die oben genannten Einzelverbindungen.

Die Verbindungen der Formel (I) können nach folgenden Verfahren hergestellt werden:

a) $PCl_3$ wird zu einer Mischung von 1,3-Diol-Derivaten, Wasser und einem organischen Lösungsmittel bei einer Temperatur von 10-60°C zugegeben. Man erhält dabei ein 5,5-disubstituiertes 1,3,2-Dioxaphosphorinan-2-oxid der Formel (Ia)

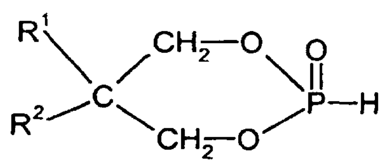

(Ia),

wobei $R_1$ und $R_2$ die oben genannte Bedeutung haben,

b) nach Reinigung wird das 1,3,2-Dioxaphosphorinan-2-oxid in Paraformaldehyd mit einem Amin $B_yNH_{3-y}$, wobei B und y die oben genannte Bedeutung haben, zur Reaktion gebracht,

c) nach erneuter Reinigung und Trocknung wird das Phosphonatamin der Formel (I) erhalten.

Eine detailierte Beschreibung des Herstellungsverfahren kann aus US-Patentschrift 5 844 028 entnommen werden.

__Komponente E__

Die Komponente E umfasst eine oder mehrere Phosphor-Verbindungen oder eine Mischung aus wenigstens einer Mono- und wenigstens einer Oligomeren-Phosphorverbindung der oben genannten Formeln (IIa), (IIb), (IIc) und (IId).

In der Formel (IIa) haben $R^1$, $R^2$, $R^3$ und $R^4$, die oben angegebenen Bedeutungen. Bevorzugt stehen $R^1$, $R^2$, $R^3$ und $R^4$ unabhängig voneinander für $C_1$-$C_4$-Alkyl, Phenyl. Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$-$C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (IIa) bedeutet einen ein- oder mehrkemigen aromatischen Rest mit 6 bis 30 C-Atomen. Dieser leitet sich vorzugsweise von Diphenolen der Formel (III) ab wie z.B. Diphenylphenol, Bisphenol A bzw. von Resorcin oder Hydrochinon oder deren chlorierten oder bromierten Derivaten.

n in der Formel (IIa) kann, unabhängig voneinander, 0 oder 1 sein, vorzugsweise ist n gleich 1.

k steht für Werte von 0 bis 30, vorzugsweise für einen durchschnittlichen Wert von 0,3 bis 20 , besonders bevorzugt 0,5 bis 10, insbesondere 0,5 bis 6.

Als erfindungsgemäße Komponente E werden insbesondere Mischungen aus vorzugsweise 10 bis 90 Gew.-%, vorzugsweise 12 bis 40 Gew.-%, wenigstens einer Monophosphorverbindung und wenigstens einer oligomeren Phosphorverbindung der Formel (IIa) beziehungsweise eines Gemisches von oligomeren Phosphorverbindungen in Mengen von 10 bis 90 Gew.-%, vorzugsweise 60 bis 88 Gew.-%, bezogen auf die Gesamtmenge an Phosphorverbindungen, eingesetzt.

Monophosphorverbindungen der Formel (IIa) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Mischungen aus monomeren und oligomeren Phosphorverbindungen der Formel (I) weisen durchschnittliche k-Werte von 0,3 bis 20, bevorzugt 0,5 bis 10, insbesondere von 0,5 bis 6 auf.

Die Phosphorverbindungen gemäß Komponente E sind bekannt (vgl. z.B. EP-A 363 608, EP-A 640 655) oder lassen sich nach bekannten Methoden in analoger Weise herstellen (z.B. Ullmanns Encyklopädie der technischen Chemie, Bd. 18, S. 301 ff. 1979; Houben-Weyl, Methoden der organischen Chemie, Bd. 12/1, S. 43; Beilstein Bd. 6, S. 177).

Die erfindungsgemäßen Formmassen können als Phosphorverbindungen Metallverbindungen von Monoestern der Phosphorsäure der Formel (IIb) und/oder (IIc),

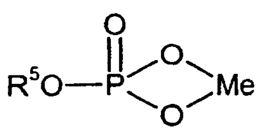

(IIb)

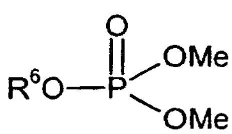

(IIc)

oder Metallverbindungen von Diestem der Phosphorsäure gemäß Formel (IId) enthalten

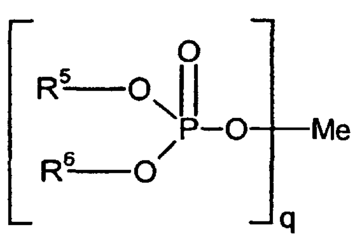

(IId),

worin $R^5$ und $R^6$, Me und q die zuvor beschriebene Bedeutung haben.

$R^5$ und $R^6$ stehen unabhängig voneinander vorzugsweise für gegebenenfalls halogeniertes (vorzugsweise

durch Chlor und/oder Brom) $C_1$-$C_{15}$-, insbesondere $C_1$-$C_{10}$-Alkyl, jeweils gegebenenfalls durch Halogen (vorzugsweise Chlor und/oder Brom) und/oder $C_1$-$C_6$-, insbesondere $C_1$-$C_4$-Alkyl, insbesondere Methyl, Ethyl, n-, iso-Propyl, substituiertes Cyclopentyl, Cyclohexyl, Phenyl, Naphthyl, Phenyl-$C_1$-$C_4$-alkyl (wie Benzyl).

$R^5$ und $R^6$ stehen unabhängig voneinander besonders bevorzugt für Kresyl, Phenyl, Xylenyl, Propylphenyl oder Butylphenyl sowie die entsprechenden bromierten und chlorierten Derivate davon.

Geeignete Metalle Me stellen die 1. bis 3. Hauptgruppe sowie die Nebengruppe VIII, IB und IIB des Periodensystems (nach Mendelejew) dar, bevorzugt sind Metalle aus der 2. und 3. Hauptgruppe und der II. Nebengruppe.

Besonders bevorzugt sind die Verbindungen der Metalle Mg, Ca, Ba, Bor, Al und Zn.

Zur Herstellung der erfindungsgemäßen Metallverbindungen der Phosphorsäureester sind literaturbekannte Verfahren wie beispielsweise das Umesterungsverfahren ausgehend von Triestern der Phosphorsäure oder das Säurehalogenid-Verfahren, ausgehend von Phosphorylchlorid geeignet (EP-A 0 801 116; J. Org. Chem. 1978, Vol. 43, Nr. 1, S. 24-31).

Vorzugsweise werden bei der Herstellung der erfindungsgemäßen Phosphorsäureester die anorganischen Reaktionskomponenten in feinstteiliger Form eingesetzt. Die durchschnittlichen Teilchendurchmesser sind $\leq 1$ µm, vorzugsweise $\leq 200$ nm.

**<u>Komponente F</u>**

Die fluorierten Polyolefine F sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0,05 bis 1 000, vorzugsweise 0,08 bis 20 µm. Im allgemeinen haben die fluorierten Polyolefine F eine Dichte von 1,2 bis 2,3 g/cm$^3$. Bevorzugte fluorierte Polyolefine F sind Polytetrafluorethylen, Polyvinylidenfluorid, Tetrafluorethylen(Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1962, Seite 484-494; "Fluorpolymers" von Wall, Wiley-Interscience, John Wiley & Sons, Inc., New York, Band 13, 1970, Seite 623-654; "Modern Plastics Encyclopedia", 1970-1971, Band 47, Nr. 10 A, Oktober 1970, Mc Graw-Hill, Inc., New York, Seite 134 und 774; "Modern Plastica Encyclopedia", 1975-1976, Oktober 1975, Band 52, Nr. 10 A, Mc Graw-Hill, Inc., New York, Seite 27, 28 und 472 und US-PS 3 671 487, 3 723 373 und 3 838 092).

Sie können nach bekannten Verfahren hergestellt werden, so beispielsweise durch Polymerisation von Tetrafluorethylen in wässrigem Medium mit einem freie Radikale bildenden Katalysator, beispielsweise Natrium-, Kalium- oder Ammoniumperoxidisulfat bei Drucken von 7 bis 71 kg/cm$^2$ und bei Temperaturen von 0 bis 200°C, vorzugsweise bei Temperaturen von 20 bis 100°C. (Nähere Einzelheiten s. z. B. US-Patent 2 393 967). Je nach Einsatzform kann die Dichte dieser Materialien zwischen 1,2 und 2,3 g/cm$^3$, die mittlere Teilchengröße zwischen 0,5 und 1 000 µm liegen.

Erfindungsgemäß bevorzugte fluorierte Polyolefine F sind Tetrafluorethylenpolymerisate mit mittleren Teilchendurchmesser von 0,05 bis 20 µm, vorzugsweise 0,08 bis 10 µm, und eine Dichte von 1,2 bis 1,9 g/cm$^3$ und werden vorzugsweise in Form einer koagulierten Mischung von Emulsionen der Tetrafluorethylenpolymerisate F mit Emulsionen der Pfropfpolymerisate B eingesetzt.

Weitere erfindungsgemäß bevorzugte Zubereitungen sind die fluorierten Polyolefine F:

F.1) als koagulierte Mischung mit mindestens einer der Komponenten A bis C, wobei das fluorierte Polyolefin F bzw. Polyolefingemisch als Emulsion mit mindestens einer Emulsion der Komponenten A bis C gemischt und anschließend koaguliert wird.

F.2) als Präcompound mit mindestens einer der Komponenten A bis C, wobei die fluorierten Polyolefine F als Pulver mit einem Pulver oder einem Granulat mindestens einer der Komponenten A bis C vermischt und in der Schmelze, im allgemeinen bei Temperaturen von 208°C bis 330°C in den üblichen Aggregaten wie Innenkneter, Extruder oder Doppelwellenschnecken, compoundiert wird.

Bevorzugte Zubereitungen für die fluorierten Polyolefine F sind koagulierte Mischungen mit einem Pfropfpolymerisat B oder einem Vinyl(co)polymerisat C.

Geeignete, in Pulverform einsetzbare fluorierte Polyolefine F sind Tetrafluorethylenpolymerisate mit mittleren Teilchendurchmesser von 100 bis 1 000 µm und Dichten von 2,0 g/cm$^3$ bis 2,3 g/cm$^3$.

Zur Herstellung einer koagulierten Mischung aus B und F wird zuerst eine wässrige Emulsion (Latex) eines Pfropfpolymerisates B mit einer feinteiligen Emulsion eines Tetrafluorethylenpolymerisates F vermischt; geeignete Tetrafluorethylenpolymerisat-Emulsionen besitzen üblicherweise Feststoffgehalte von 30 bis 70 Gew-.%, insbesondere von 50 bis 60 Gew.-%, vorzugsweise von 30 bis 35 Gew.-%.

Die Mengenangabe bei der Beschreibung der Komponente B kann den Anteil des Pfropfpolymerisats für die koagulierte Mischung aus Pfropfpolymerisat und fluoriertem Polyolefinen einschließen.

In der Emulsionsmischung liegt das Gleichgewichtsverhältnis Pfropfpolymerisat B zum Tetrafluorethylenpolymerisat F bei 95:5 bis 60:40. Anschließend wird die Emulsionsmischung in bekannter Wiese koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesonderc von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Die erfindungsgemäßen Formmassen können weingstens eines der üblichen Additivc, wie Gleit- und Entformungsmittel, Nukleiermittel, Antistatika, Stabilisatoren sowie Farbstoffe und Pigmente enthalten.

Die erfindungsgemäßen Formmassen können bis zu 35 Gew.-%, bezogen auf die Gesamt-Formmasse, eines weiteren, gegebenenfalls synergistisch wirkenden Flammschutzmittels enthalten. Beispielhaft werden als weitere Flammschutzmittel organische Halogenverbindugen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumoxid und Zinnoxid sowie Siloxanverbindungen genannt.

Die erfindungsgemäßen Blends enthaltend die Komponenten A bis F und gegebenenfalls weiteren bekannten Zusätzen wie Stabilisatoren, Farbstoffen, Pigmenten, Gleit- und Entformungsmitteln, Nukleiermittel sowie Antistatika, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert, wobei die Komponente F vorzugsweise in Form der bereits erwähnten koagulierten Mischung eingesetzt wird.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Formmassen.

Die erfindungsgemäßen Blends eignen sich aufgrund ihrer ausgezeichneten Flammfestigkeit und Bindenahtfestigkeit und ihrer guten mechanischen Eigenschaften zur Herstellung von Formkörpern jeglicher Art, insbesondere solchen mit erhöhten Anforderungen an Bruchbeständigkeit.

Die Blends der vorliegenden Erfindung können zur Herstellung von Formkörpern jeder Art verwendet werden. Insbesondere können Formkörper durch Spritzguss hergestellt werden. Beispiele für herstellbare Formkörper sind: Gehäuseteile jeder Art, z.B. für Haushaltsgeräte wie Saftpressen, Kaffeemaschinen, Mixer, für Büromaschinen, wie Monitore, Drucker, Kopierer oder Abdeckplatten für den Bausektor und Teile für den Kfz-Sektor. Sie sind außerdem auf dem Gebiet der Elektrotechnik einsetzbar, weil sie sehr gute elektrische Eigenschaften haben.

Weiterhin können die erfindungsgemäßen Formmassen beispielsweise zur Herstellung von folgenden Formkörpern bzw. Formteilen verwendet werden:

Innenausbauteile für Schienenfahrzeuge, Radkappen, Gehäuse von Kleintransformatoren enthaltenden Elektrogeräten, Gehäuse für Geräte zur Informationsverbreitung und -Übermitttung, Gehäuse und Verkleidung für medizinische Zwecke, Massagegeräte und Gehäuse dafür, Spielfahrzeuge für Kinder, Flächige Wandelemente, Gehäuse für Sicherheitseinrichtungen, Heckspoiler, Wärmeisolierte Transportbehältnisse, Vorrichtung zur Haltung oder Versorgung von Kleintieren, Formteile für Sanitär- und Badeausrüstungen, Abdeckgitter für Lüfteröffnungen, Formteile für Garten- und Gerätehäuser, Gehäuse für Gartengeräte.

Eine weitere Form der Verarbeitung ist die Herstellung von Formtkörpern durch Tiefziehen aus vorher hergestellten Platten oder Folien.

Ein weiterer Gegenstand der vorliegenden Erfindung ist daher auch die Verwendung der erfindungsgemäßen Formmassen zur Herstellung von Formkörpern jeglicher Art, vorzugsweise der oben genannten, sowie die Formkörper aus den erfindungsgemäßen Formmassen.

## Beispiele

### Komponente A

Lineares Polycarbonat auf Basis Bisphenol A mit einer relativen Lösungsviskosität von 1,2.52, gemessen in $CH_2Cl_2$ als Lösungsmittel bei 25°C und einer Konzentration von 0,5 g/100 ml.

### Komponente B

Pfropfpolymerisat von 45 Gew.-Teilen eines Copolymerisats aus Styrol und Acrylnitril im Verhältnis von 72:

28 auf 55 Gew.-Teile teilchenförmigen vemetzten Polybutadienkautschuk (mittlerer Teilchendurchmesser $d_{50}$ = 0,40 µm), hergestellt durch Emulsionspolymerisation.

**Komponente C**

Styrol/Acrylnitril-Copolymerisat mit einem Styrol/Acrylnitril-Gewichtsverhältnis von 72:28 und einer Grenzviskosität von 0,55 dl/g (Messung in Dimethylformamid bei 20°C).

**Komponente D**

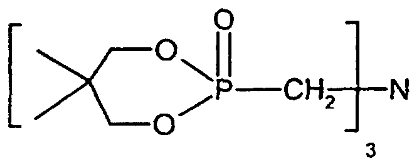

(XPM 1000 Entwicktungsprodukt Fa. Solutia Inc., St. Louis, USA)

**Komponente E**

E.1 Triphenylphosphat, Disflamoll TP® der Firma Bayer AG, Leverkusen, Deutschland

E.2 m-Phenylen-bis(di-phenylphosphat), Fyrolflex® der Firma AKZO, Nobel Chemicals GmbH, 52349 Düren, Germany.

**Komponente F**

Batch aus SAN/Teflon im Gewichtsverhältnis 1:1: Blendex 446, General Electric, N.Y., USA.

**Herstellung und Prüfung der erfindungsgemäßen Formmassen**

Das Mischen der Komponenten erfolgt auf einem 3-1-Innenkneter. Die Formkörper werden auf einer Spritzgießmaschine Typ Arburg 270 E bei 260°C hergestellt.
Die Bestimmung der Wärmeformbeständigkeit nach Vicat B erfolgt gemäß DIN 53 460 (ISO 306) an Stäben der Abmessung 80 x 10 x 4 mm.
Zur Ermittlung der Bindenahtfestigkeit wird die Schlagzähigkeit nach DIN 53 453 an der Bindenaht von beidseitig ausgespritzten Prüfkörpern (Verarbeitungstemperatur 260°C) der Dimension 170 x 10 x 4 mm gemessen.
Das Spannungsrissverhalten (ESC-Verhalten) wird an Stäben der Abmessung 80 x 10 x 4 mm, Verarbeitungstemperatur 260°C, untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung in Prozent) und bei Raumtemperatur im Testmedium gelagert. Das Spannungsrissverhalten wird über die Rissbildung bzw. den Bruch in Abhängigkeit von der Vordehnung im Testmedium beurteilt.
Die Bestimmung des Zug E-Moduls erfolgt nach DIN 53 457/ISO 527.
Der Rohton wird qualitativ durch +/0/- beurteilt (visuelle Beurteilung).
Die Messung der Viskosität erfolgt nach DIN 58 811

**Tabelle: Formmassen und ihre Eigenschaften**

| Beispiel | 1 (Vgl.) | 2 |
|---|---|---|
| Komponente | | |
| A | 67,60 | 67,60 |
| B | 10,50 | 10,50 |
| C | 8,80 | 8,80 |
| D | 11,90 | 5,95 |
| E.1 und E.2 im Gewichtsverhältnis 1:3 | - | 5,95 |
| F | 0,8 | 0,8 |
| Entformungsmittel | 0,4 | 0,4 |
| Eigenschaften: | | |
| UL 94 V 3,2 mm | V0 | V0 |
| Gesamt-Nachbrennzeit [s] | 5 | 1 |
| E-Modul [$N/mm^2$] | 2474 | 2554 |
| Schmelzviskosität 260°C/1000 $s^{-1}$ | 141,3 | 112,2 |
| Rohton | 0 | + |
| $a_n$ (Bindenaht) $\left[\frac{kJ}{m^2}\right]$ | 6,4 | 6,7 |

**Patentansprüche**

1. Blends enthaltend Polycarbonat und/oder Polyestercarbonat und 0,1 bis 30 Gew.-Teile Phosphonatamin der Formel (I)

$$A_{3-y}NB_y \quad (I)$$

in welcher

A für einen Rest der Formel (IIa)

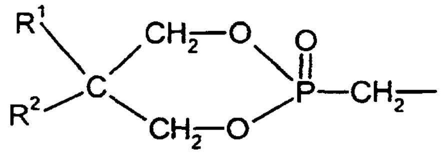

(IIa)

oder (IIb)

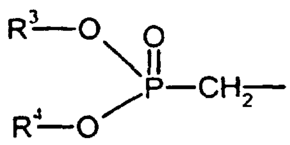

(IIb)

steht.

R1 und R2 unabhängig voneinander für unsubstituiertes oder substituiertes $C_1$-$C_{10}$-Alkyl oder für unsubstituiertes oder substituiertes $C_6$-$C_{10}$-Aryl, stehen,

R3 und R4 unabhängig voneinander für unsubstituiertes oder substituiertes $C_1$-$C_{10}$-Alkyl oder unsubstituiertes oder substituiertes $C_6$-$C_{10}$-Aryl stehen oder

R3 und R4 zusammen für unsubstituiertes oder substituiertes $C_3$-$C_{10}$-Alkylen stehen,

y die Zahlenwerte 0, 1 oder 2 bedeuten und

B unabhängig für Wasserstoff, gegebenenfalls halogeniertes $C_2$-$C_8$-Alkyl, unsubstituiertes oder substituiertes $C_6$-$C_{10}$-Aryl steht, und

0,1 bis 20 Gew.-Teile mindestens einer Phosphorverbindung der allgemeinen Formeln (IIa), (IIb), (IIc) und (IId)

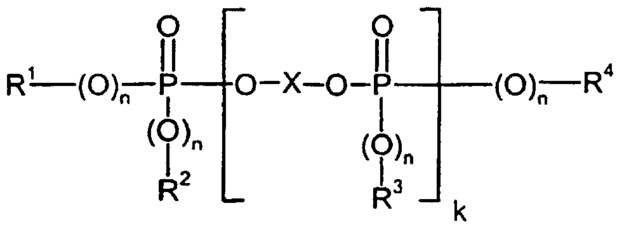

(IIa),

worin

$R^1$, $R^2$, $R^3$ und $R^4$, unabhängig voneinander jeweils gegebenenfalls halogeniertes $C_1$- bis $C_8$-Alkyl, jeweils gegebenenfalls durch Alkyl und/oder Halogen substituiertes $C_5$- bis $C_6$-Cycloalkyl, $C_6$- bis $C_{20}$-Aryl oder $C_7$- bis $C_{12}$-Aralkyl stehen,

n unabhängig voneinander, 0 oder 1

k 0 bis 30 und

X einen ein- oder mehrkemigen aromatischen Rest mit 6 bis 30 C-Atomen bedeuten;

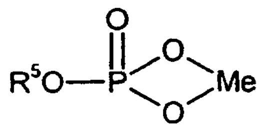

(IIb)

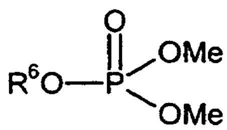

(IIc)

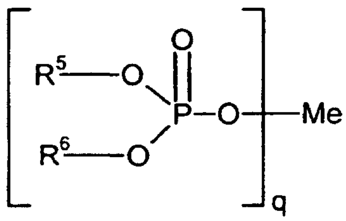

(IId)

worin

$R^5$ und $R^6$ unabhängig voneinander, gegebenenfalls halogeniertes $C_1$-$C_{24}$-Alkyl, jeweils gegebenenfalls durch Halogen und/oder $C_1$-$C_{10}$-Alkyl substituiertes $C_5$-$C_6$-Cycloalkyl, $C_6$-$C_{20}$-Aryl oder $C_7$-$C_{12}$-Aralkyl bedeuten,

oder

$R^5$ und $R^6$ im Falle der Formel (IId) eine Alkyl-Kette bilden,

Me für ein Metall, ausgewählt aus der 1. bis 3. Hauptgruppe und VIII, 1B und 2B der Nebengruppe des Periodensystems steht,

und q durch die Wertigkeit des Metallions bestimmt wird,

und gegebenenfalls Schlagzähmodifiktionen, wobei die Mengenangaben sich auf die Gesamtmischung beziehen.

**2.** Blends gemäß Anspruch 1, enthaltend 0,1 bis 30 Gew.-Teile, bezogen auf die Gesamtmischung, Phosphonatamin und 0,5 bis 20 Gew.-Teile mindestens eine Phosphorverbindung der Formeln (IIa), (IIb), (IIc) und (IId).

**3.** Blends gemäß Anspruch 1 und 2 enthaltend Pfropfpolymerisate als Schlagzähmodifikatoren.

**4.** Blends gemäß Anspruch 1 bis 3 enthaltend

A) 40 bis 99 Gew.-Teile aromatisches Polycarbonat und/oder Polyestercarbonat

B) 0,5 bis 60 Gew.-Teile Pfropfpolymerisat von

B.1) 5 bis 95 Gew.-% einem oder mehreren Vinylmonomeren auf

B.2) 95 bis 5 Gew.-% einer oder mehrerer Pfropfgrundlagen mit einer Glasumwandlungstemperatur <10°C

C) 0 bis 45 Gew.-Teile mindestens eines thermoplastischen Polymers, ausgewählt aus der Gruppe der Vinyl (co)polymerisate und Polyalkylenterephthalate,

D) 0,1 bis 30 Gew.-Teile mindestens eine Komponente, ausgewählt aus der Gruppe der Phosphonatamine der Formel (I) gemäß Anspruch 1.

E) 0,5 bis 20 Gew.-Teile Phosphorverbindung, ausgewählt aus mindestens einer Phosphorverbindung der allgemeinen Formeln (IIa), (IIb), (IIc) und (IId),

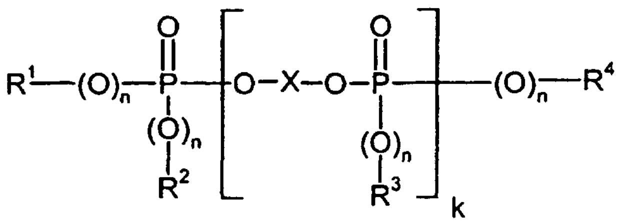

(IIa),

worin

| | |
|---|---|
| $R^1$, $R^2$, $R^3$ und $R^4$, | unabhängig voneinander jeweils gegebenenfalls halogeniertes $C_1$- bis $C_8$-Alkyl, jeweils gegebenenfalls durch Alkyl und/oder Halogen substituiertes $C_5$- bis $C_6$-Cycloalkyl, $C_6$- bis $C_{20}$-Aryl oder $C_7$- bis $C_{12}$-Aralkyl stehen, |
| n | unabhängig voneinander, 0 oder 1 |
| k | 0 bis 30 und |
| X | einen ein- oder mehrkernigen aromatischen Rest mit 6 bis 30 C-Atomen bedeuten; |

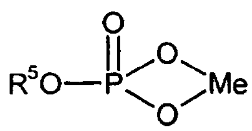

(IIb)

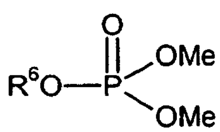

(IIc)

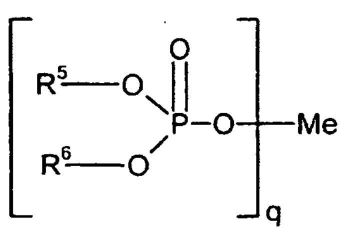

(IId)

worin

R⁵ und R⁶ unabhängig voneinander, gegebenenfalls halogeniertes $C_1$-$C_{24}$-Alkyl, jeweils gegebenenfalls durch Halogen und/oder $C_1$-$C_{10}$-Alkyl substituiertes $C_5$-$C_6$-Cycloalkyl, $C_6$-$C_{20}$-Aryl oder $C_7$-$C_{12}$-Aralkyl bedeuten,

oder

$R^5$ und $R^6$ im Falle der Formel (IId) eine Alkyl-Kette bilden,

Me für ein Metall, ausgewählt aus der 1. bis 3. Hauptgruppe und VIII, 1B und 2B der Nebengruppe des Periodensystems steht,

und q durch die Wertigkeit des Metallions bestimmt wird,

F) 0 bis 5 Gew.-Teile fluoriertes Polyolefin,

wobei die Summe der Gew.-Teile aller Blendkomponenten 100 beträgt.

**5.** Blends gemäß Anspruch 1 bis 4, enthaltend
60 bis 98,5 Gew.-Teile A
1 bis 40 Gew.-Teile B
0 bis 30 Gew.-Teile C
1 bis 25 Gew.-Teile D
1 bis 18 Gew.-Teile E und
0,1 bis 1 Gew.-Teile F.

**6.** Blends gemäß Anspruch 1 bis 5, enthaltend
2 bis 25 Gew.-Teile B
2 bis 20 Gew.-Teile D
2 bis 15 Gew.-Teile E und
0,1 bis 0,5 Gew.-Teile F.

**7.** Blends gemäß der vorhergehenden Ansprüche enthaltend 2 bis 25 Gew.-Teile C.

**8.** Blends nach einem oder mehreren der vorangegangenen Ansprüche, enthaltend Phosphonatamine ausgewählt aus der Gruppe 5,5,5',5',5",5"-Hexamethyltris(1,3,2-dioxaphosphorinanmethan)amino-2,2'-2"-trioxid, 1,3,2-Dioxaphosphorinan-2-methanamin, N-butyl-N[(5,5-dimethyl-1,3,2-dioxaphosphorinan-2-yl)methyl]-5,5-dimethyl-, P, 2-dioxide; 1,3,2-Dioxaphosphorinane-2-methanamin, N-[[5,,5-dimethyl-1,3,2-dioxaphosphorinan-2-yl)methyl]-5,5-dimethyl-N-phenyl-, P,2-dioxid; 1,3,2-Dioxaphosphorinan-2-methanamin, N,N-dibutyl-5,5-dimethyl-, 2-oxid, 1,3,2-Dioxaphosphorinan-2-methanimin, N-[(5,5-dimethyl-1,3,2-dioxaphosphorinan-2-yl)methyl]-N-ethyl-5,5-dimethyl-, P,2-dioxid, 1,3,2-Dioxaphosphorinan-2-methanamin, N-butyl-N-[(5,5-dichloromethyl-1,3,2-dioxaphosphorinan-2-yl)-methyl]-5,5-dichloromethyl-, P,2-dioxid, 1,3,2-Dioxaphosphorinan-2-methanamin, N-[(5,5-di-chloromethyl-1,3,2-dioxoaphosphorinan-2-yl)methyl]-5,5-di-chloromethyl-N-phenyl-, P,2-dioxid; 1,3,2-Dioxaphosphorinan-2-methanamin, N,N-di-(4-chlorobutyl)-5,5-dimethyl-2-oxide; 1,3,2-Dioxaphosphorinan-2-methanimin, N-[(5,5-dimethyl-1,3,2-dioxaphosphorinan-2-yl)methan]-N-(2-chloroethyl)-5,5-di(chloromethyl)-, P2-dioxid.

**9.** Blends gemäß der vorhergehenden Ansprüche, wobei Vinylmonomere B.1 Gemische aus

B.1.1 50 bis 99 Gew.-Teilen Vinylaromaten und/oder kernsubstituierten Vinylaromaten und/oder Methacrylsäure-($C_1$-$C_4$)-Alkylester und

B.1.2 1 bis 50 Gew.-Teilen Vinylcyanide und/oder (Meth)Acrylsäure-($C_1$-$C_8$)-Alkylester und/oder Derivate ungesättigter Carbonsäuren sind.

**10.** Blends gemäß der vorhergehenden Ansprüche, wobei die Pfropfgrundlage B.2 ausgewählt ist aus mindestens einem Kautschuk aus der Gruppe bestehend aus Dienkautschuke, EP(D)M-Kautschuke, Acrylat-, Polyurethan-, Silikon-, Chlorpren- und Ethylen/Vinylacetat-Kautschuke.

**11.** Blends gemäß der vorhergehenden Ansprüche enthaltend wenigstens ein Additiv ausgewählt aus der Gruppe der

Gleit- und Entformungsmittel, Nukleiermittel, Antistatika, Stabilisatoren, Farbstoffe und Pigmente.

**12.** Verfahren zur Herstellung von Formmassen gemäß Anspruch 1, wobei die Komponenten A bis F und gegebenenfalls weiteren Zusätzen vermischt und schmelzcompoundiert werden.

**13.** Verwendung der Formmassen gemäß Anspruch 1 bis 12 zur Herstellung von Formkörpern.

**14.** Formkörper, erhältlich aus Formmassen gemäß der Ansprüche 1 bis 12.

**15.** Gehäuseteile, gemäß Anspruch 14.

## Claims

**1.** Blends containing polycarbonate and/or polyester carbonate and from 0.1 to 30 parts by weight of phosphonate amine of formula (I)

$$A_{3-y}N\text{-}B_y \qquad (I)$$

in which

A represents a radical of formula (IIa)

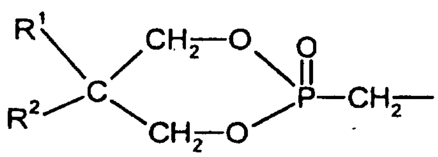

(IIa)

or (IIb)

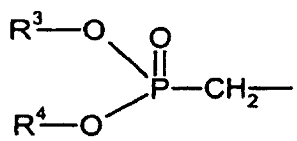

(IIb)

$R^1$ and $R^2$ are each independently of the other unsubstituted or substituted $C_1$-$C_{10}$-alkyl or unsubstituted or substituted $C_6$-$C_{10}$-aryl,

$R^3$ and $R^4$ are each independently of the other unsubstituted or substituted $C_1$-$C_{10}$-alkyl or unsubstituted or substituted $C_6$-$C_{10}$-aryl, or

$R^3$ and $R^4$ together represent unsubstituted or substituted $C_3$-$C_{10}$-alkylene,

y represents the numerical values 0, 1 or 2, and the substituents B are each independently hydrogen, optionally halogenated $C_2$-$C_8$-alkyl,
unsubstituted or substituted $C_6$-$C_{10}$-aryl, and

from 0.1 to 20 parts by weight of at least one phosphorus compound of the general formulae (IIa), (IIb), (IIc) and (IId)

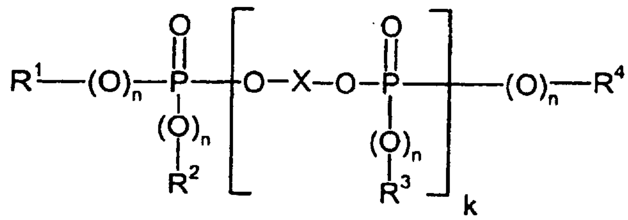

(IIa),

wherein

$R^1$, $R^2$, $R^3$ and $R^4$ are each independently of the others optionally halogenated $C_1$- to $C_8$-alkyl, or $C_5$- to $C_6$-cycloalkyl, $C_6$- to $C_{20}$-aryl or $C_7$- to $C_{12}$-aralkyl each optionally substituted by alkyl and/or by halogen,

the substituents n are each independently of the others 0 or 1,

k represents from 0 to 30, and

X represents a mono- or poly-nuclear aromatic radical having from 6 to 30 carbon atoms,

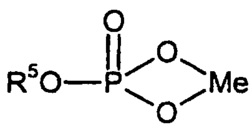

(IIb)

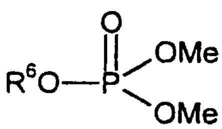

(IIc)

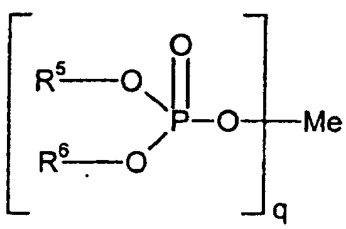

(IId)

wherein

$R^5$ and $R^6$ are each independently of the other optionally halogenated $C_1$-$C_{24}$-alkyl, or $C_5$-$C_6$-cycloalkyl, $C_6$-$C_{20}$-aryl or $C_7$-$C_{12}$-aralkyl each optionally substituted by halogen and/or by $C_1$-$C_{10}$-alkyl,

or
$R^5$ and $R^6$ in the case of formula (IId) form an alkyl chain,

Me represents a metal selected from main groups 1 to 3 and subsidiary groups VIII, 1B and 2B of the periodic system,

and q is determined by the valency of the metal ion,
and, optionally, impact strength modifiers, the indicated amounts being based on the total mixture.

**2.** Blends according to claim 1 containing from 0.1 to 30 parts by weight, based on the total mixture, of phosphonate

amine and from 0.5 to 20 parts by weight of at least one phosphorus compound of formulae (IIa), (IIb), (IIc) and (IId).

**3.** Blends according to claims 1 and 2 containing graft polymers as the impact strength modifiers.

**4.** Blends according to any of claims 1 to 3 containing

A) from 40 to 99 parts by weight of aromatic polycarbonate and/or polyester carbonate,

B) from 0.5 to 60 parts by weight of graft polymer of

B.1) from 5 to 95 wt.% of one or more vinyl monomers with

B.2) from 95 to 5 wt.% of one or more graft bases having a glass transition temperature < 10°C,

C) from 0 to 45 parts by weight of at least one thermoplastic polymer selected from the group of the vinyl (co) polymers and polyalkylene terephthalates,

D) from 0.1 to 30 parts by weight of at least one component selected from the group of the phosphonate amines of formula (I) according to claim 1,

E) from 0.5 to 20 parts by weight of phosphorus compound selected from at least one phosphorus compound of the general formulae (IIa), (IIb), (IIc) and (IId),

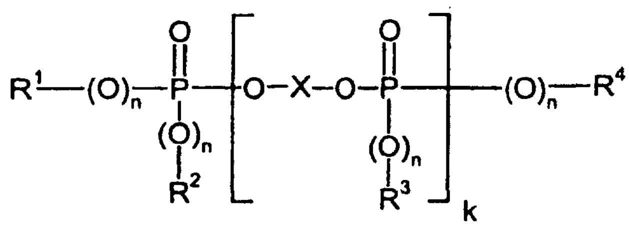

(IIa),

wherein

$R^1$, $R^2$, $R^3$ and $R^4$ are each independently of the others optionally halogenated $C_1$- to $C_8$-alkyl, or $C_5$- to $C_6$-cycloalkyl, $C_6$- to $C_{20}$-aryl or $C_7$- to $C_{12}$-aralkyl each optionally substituted by alkyl and/or by halogen,

the substituents n are each independently of the others 0 or 1,

k represents from 0 to 30, and

X represents a mono- or poly-nuclear aromatic radical having from 6 to 30 carbon atoms,

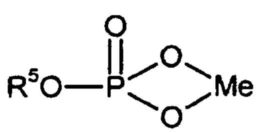

(IIb)

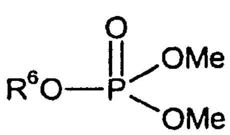

(IIc)

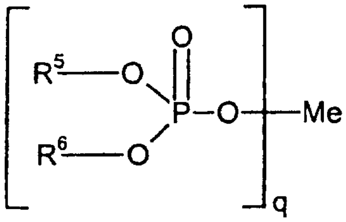

(IId)

wherein

$R^5$ and $R^6$ are each independently of the other optionally halogenated $C_1$-$C_{24}$-alkyl, or $C_5$-$C_6$-cycloalkyl, $C_6$-$C_{20}$-aryl or $C_7$-$C_{12}$-aralkyl each optionally substituted by halogen and/or-by $C_1$-$C_{10}$-alkyl,

or
$R^5$ and $R^6$ in the case of formula (IId) form an alkyl chain,

Me represents a metal selected from main groups 1 to 3 and subsidiary groups VIII, 1B and 2B of the periodic system,

and q is determined by the valency of the metal ion,

F) from 0 to 5 parts by weight of fluorinated polyolefin,

the sum of the parts by weight of all the components of the blend being 100.

**5.** Blends according to any of claims 1 to 4 containing
from 60 to 98.5 parts by weight of A
from 1 to 40 parts by weight of B
from 0 to 30 parts by weight of C
from 1 to 25 parts by weight of D
from 1 to 18 parts by weight of E and
from 0.1 to 1 part by weight of F.

**6.** Blends according to any of claims 1 to 5 containing
from 2 to 25 parts by weight of B
from 2 to 20 parts by weight of D
from 2 to 15 parts by weight of E and
from 0.1 to 0.5 part by weight of F.

**7.** Blends according to any of the preceding claims containing from 2 to 25 parts by weight of C.

**8.** Blends according to one or more of the preceding claims containing phosphonate amines selected from the group 5,5,5',5',5",5"-hexamethyl-tris(1,3,2-dioxaphosphorinane-methane)amin-2,2',2"-trioxide, 1,3,2-dioxaphosphorinane-2-methaneamine, N-butyl-N[(5,5-dimethyl-1,3,2-dioxaphosphorinan-2-yl)methyl]-5,5-dimethyl-, P,2-dioxides; 1,3,2-dioxaphosphorinane-2-methaneamine, N-[(5,5-dimethyl-1,3,2-dioxaphosphorinan-2-yl)methyl)-5,5-dimethyl-N-phenyl-, P,2-dioxide; 1,3,2-dioxaphosphorinane-2-methaneamine, N,N-dibutyl-5,5-dimethyl-, 2-oxide, 1,3,2-dioxaphosphorinane-2-methaneimine, N-[(5,5-dimethyl-1,3,2-dioxaphosphorinan-2-yl)methyl]-N-ethyl-5,5-dimethyl-, P,2-dioxide, 1,3,2-dioxaphosphorinane-2-methaneamine, N-butyl-N-[(5,5-dichloromethyl-1,3,2-dioxaphosphorinan-2-yl)-methyl]-5,5-dichloromethyl-, P,2-dioxide, 1,3,2-dioxaphosphorinane-2-methaneamine, N-[(5,5.-di-chloromethyl-1,3,2-dioxaphosphorinan-2-yl)methyl]-5,5-dichloromethyl-N-phenyl-, P,2-dioxide; 1,3,2-dioxaphosphorinane-2-methaneamine, N,N-di-(4-chlorobutyl)-5,5-dimethyl-2-oxides; 1,3,2-dioxaphosphorinane-2-methaneimine, N-[(5,5-dimethyl-1,3,2-dioxaphosphorinan-2-yl)methane]-N-(2-chloroethyl)-5,5-di (chloromethyl)-, P,2-dioxide.

**9.** Blends according to any of the preceding claims, wherein vinyl monomers B.1 are mixtures of

B.1.1 from 50 to 99 parts by weight of vinyl aromatic compounds and/or vinyl aromatic compounds substituted at the ring and/or methacrylic acid ($C_1$-$C_4$)-alkyl esters and

B.1.2 from 1 to 50 parts by weight of vinyl cyanides and/or (meth)acrylic acid ($C_1$-$C_8$)-alkyl esters and/or derivatives of unsaturated carboxylic acids.

**10.** Blends according to any of the preceding claims, wherein the graft base B.2 is selected from at least one rubber from the group consisting of diene rubbers, EP(D)M rubbers, acrylate, polyurethane, silicone, chloroprene and ethylene/vinyl acetate rubbers.

**11.** Blends according to any of the preceding claims containing at least one additive selected from the group of the lubricating and mould-release agents, nucleating agents, antistatics, stabilisers, colourings and pigments.

**12.** Process for producing moulding compositions according to claim 1, wherein components A to F and, optionally, other additives are mixed and melt-compounded.

**13.** Use of the moulding compositions according to any of claims 1 to 12 in the production of moulded bodies.

**14.** Moulded bodies obtainable from moulding compositions according to any of claims 1 to 12.

**15.** Casing parts according to claim 14.

**Revendications**

**1.** Mélanges contenant un polycarbonate et/ou un polyestercarbonate et 0,1 à 30 parties en poids de phosphonatamine de formule (I)

$$A_{3-y}NB_y \qquad (I)$$

dans laquelle

A est un radical de formule (IIa)

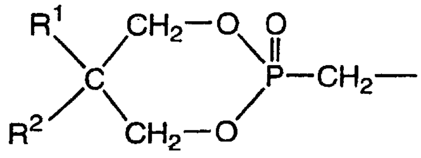

(IIa)

ou (IIb)

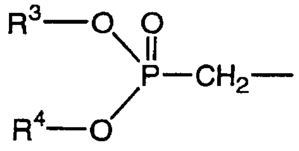

(IIb)

$R^1$ et $R^2$ indépendamment l'un de l'autre sont un radical alkyle en $C_1$-$C_{10}$ non substitué ou substitué ou un radical aryle en $C_6$-$C_{10}$ non substitué ou substitué,

$R^3$ et $R^4$ indépendamment l'un de l'autre sont un radical alkyle en $C_1$-$C_{10}$ non substitué ou substitué ou un radical aryle en $C_6$-$C_{10}$ non substitué ou substitué ou

$R^3$ et $R^4$ ensemble sont un radical alkylène en $C_3$-$C_{10}$ non substitué ou substitué,

y signifie une valeur numérique de 0, 1 où 2 et

B est indépendamment un hydrogène, un radical alkyle en $C_2$-$C_8$ éventuellement halogéné, un radical aryle en $C_6$-$C_{10}$ non substitué ou substitué et

0,1 à 20 parties en poids d'au moins un composé phosphoré de formules générales (IIa), (IIb), (IIc) et (IId)

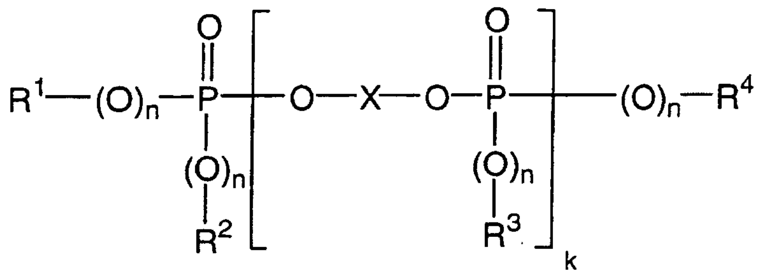

(IIa),

dans laquelle

$R^1$, $R^2$, $R^3$ et $R^4$, indépendamment l'un de l'autre sont chaque fois des radicaux alkyle en $C_1$ à $C_8$ éventuellement halogénés, chaque fois des radicaux cycloalkyle en $C_5$ à $C_6$, aryle en $C_6$ à $C_{20}$ ou aralkyle en $C_7$ à $C_{12}$ éventuellement substitués par un alkyle ou un halogène,

n indépendamment l'un de l'autre est 0 ou 1,

k est 0 à 30 et

X signifie un radical aromatique à un ou plusieurs noyaux avec 6 à 30 atomes de C ;

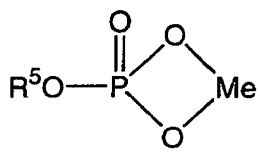

(IIb)

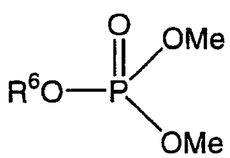

(IIc)

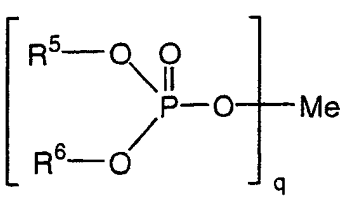

(IId)

dans lesquelles

$R^5$ et $R^6$ indépendamment l'un de l'autre signifient des radicaux alkyle en $C_1$-$C_{24}$ éventuellement halogénés, des radicaux cycloalkyle en $C_5$-$C_6$, aryle en $C_6$-$C_{20}$ ou aralkyle en $C_7$-$C_{12}$ éventuellement substitués par un halogène et/ou un alkyle en $C_1$-$C_{10}$,

ou

$R^5$ et $R^6$ dans le cas de la formule (IId) forment une chaîne alkyle,

Me est un métal, choisi dans les groupes principaux 1 à 3 et les groupes secondaires VIII, 1B et 2B du système périodique des éléments,

et q est défini par la valence de l'ion métallique,

et éventuellement modifié à résistance aux chocs, les données des quantités étant rapportées au mélange total.

**2.** Mélanges selon la revendication 1, contenant 0,1 à 30 parties en poids, rapporté au mélange total, de phosphonatamine et 0,5 à 20 parties en poids d'au moins un composé phosphoré des formules (IIa), (IIb), (IIc) et (IId).

**3.** Mélanges selon la revendication 1 ou 2, contenant des polymères greffés comme modificateurs de résistance aux chocs.

**4.** Mélanges selon les revendications 1 à 3 contenant

A) 40 à 99 parties en poids de polycarbonate aromatique et/ou de polyester carbonate,
B) 0,5 à 60 parties en poids de polymère greffé de

B.1) 5 à 95 % en poids d'un ou plusieurs monomères vinyliques
B.2) 95 à 5 % en poids d'une ou plusieurs bases de greffe avec une température de transition vitreuse < 10 °C,

C) 0 à 45 parties en poids d'au moins un polymère thermoplastique, choisi dans le groupe des (co)polymères de vinyle et le polytéréphtalate d'alkylène,
D) 0,1 à 30 parties en poids d'au moins un composant, choisi dans le groupe des phosphonatamines de formule (I) selon la revendication 1,
E) 0,5 à 20 parties en poids d'un composé phosphoré, choisi parmi au moins un composé phosphoré de formules générales (IIa), (IIb), (IIc) et (IId),

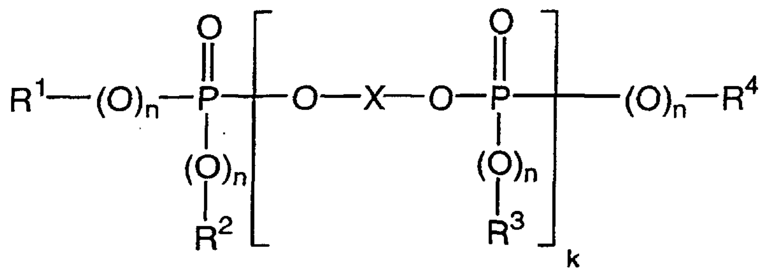

(IIa)

dans laquelle

| | |
|---|---|
| $R^1$, $R^2$, $R^3$ et $R^4$, | indépendamment l'un de l'autre sont chaque fois des radicaux alkyle en $C_1$ à $C_8$ éventuellement halogénés, chaque fois des radicaux cycloalkyle en $C_5$ à $C_6$, aryle en $C_6$ à $C_{20}$ ou aralkyle en $C_7$ à $C_{12}$ éventuellement substitués par un alkyle ou un halogène, |
| n | indépendamment l'un de l'autre est 0 ou 1, |
| k | est 0 à 30 et |
| X | signifie un radical aromatique à un ou plusieurs noyaux avec 6 à 30 atomes de C ; |

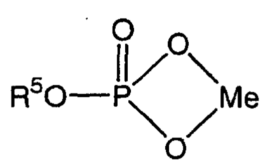

(IIb)

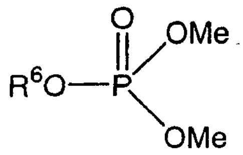

(IIc)

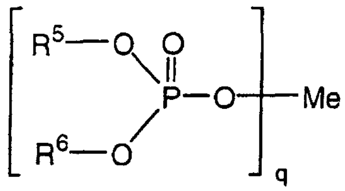

(IId)

dans lesquelles

$R^5$ et $R^6$ indépendamment l'un de l'autre signifient des radicaux alkyle en $C_1$-$C_{24}$ éventuellement halogénés, des radicaux cycloalkyle en $C_5$-$C_6$, aryle en $C_6$-$C_{20}$ ou aralkyle en $C_7$-$C_{12}$ éventuellement substitués par un halogène et/ou un alkyle en $C_1$-$C_{10}$,

ou
$R^5$ et $R^6$ dans le cas de la formule (IId) forment une chaîne alkyle,
Me est un métal, choisi dans les groupes principaux 1 à 3 et les groupes secondaires VIII, 1B et 2B du système périodique des éléments,
et q est défini par la valence de l'ion métallique,
F) 0 à 5 parties en poids d'une polyoléfine fluorée,
la somme des parties en poids de tous les composants du mélange étant de 100.

**5.** Mélanges selon les revendications 1 à 4, contenant
60 à 98,5 parties en poids de A
1 à 40 parties en poids de B
0 à 30 parties en poids de C
1 à 25 parties en poids de D
1 à 18 parties en poids de E et
0,1 à 1 parties en poids de F.

**6.** Mélanges selon les revendications 1 à 5, contenant
2 à 25 parties en poids de B
2 à 20 parties en poids de D
2 à 15 parties en poids de E et
0,1 à 0,5 parties en poids de F.

**7.** Mélanges selon les revendications précédentes contenant 2 à 25 parties en poids de C.

**8.** Mélanges selon l'une ou plusieurs des revendications précédentes, contenant des phosphonatamines choisies dans le groupe constitué par 5,5,5',5',5",5"-hexaméthyltris(1,3,2-dioxaphosphorinanméthane)amino-2,2'-2"-trioxyde, 1,3,2-dioxaphosphorinan-2-méthanamine, N-butyl-N[(5,5-diméthyl-1,3,2-dioxaphosphorinan-2-yl)méthyl]-5,5-diméthyl-,P,2-dioxyde ; 1,3,2-dioxaphosphorinan-2-méthanamine, N-[[5,5-diméthyl-1,3,2-dioxaphosphorinan-2-yl)méthyl]-5,5-diméthyl-N-phényl, P,2-dioxyde ; 1,3,2-dioxaphosphorinan-2-méthanamine, N,N-dibutyl-5,5-diméthyl-, 2-oxyde, 1,3,2-dioxaphosphorinan-2-méthanimine, N-[(5,5-diméthyl-1,3,2-dioxaphosphorinan-2-yl)méthyl]-N-éthyl-5,5-diméthyl-, P,2-dioxyde, 1,3,2-dioxaphosphorinan-2-méthanamine, N-butyl-N-[(5,5-dichlorométhyl-1,3,2-dioxaphosphorinan-2-yl)-méthyl]-5,5-dichlorométhyl-, P,2-dioxyde, 1,3,2-dioxaphosphorinan-2-méthanamine, N-[(5,5-dichlorométhyl-1,3,2-dioxaphosphorinan-2-yl)méthyl]-5,5-dichlorométhyl-N-phényl-, P, 2-dioxyde ; 1,3,2-dioxaphosphorinan-2-méthanamine, N,N-di-(4-chlorobutyl)-5,5-diméthyl-2-oxyde ; 1,3,2-dioxaphosphorinan-2-méthanimine, N-[(5,5-diméthyl-1,3,2-dioxaphosphorinan-2-yl)méthan]-N-(2-chloroéthyl)-5,5-di(chlorométhyl)-, P,2-dioxyde.

**9.** Mélanges selon les revendications précédentes, dans lesquels les mélanges de monomères vinyliques B.1. sont constitués de

B.1.1 50 à 99 parties en poids de vinylaromatiques et/ou de vinylaromatiques à substitution sur le noyau et/ou des esters d'alkyle (en $C_1$-$C_4$) d'acide méthacrylique et
B.1.2 1 à 50 parties en poids de cyanures vinyliques et/ou d'esters d'alkyle (en $C_1$-$C_8$) d'acide (méth)acrylique et/ou de dérivés d'acides carboniques insaturés.

**10.** Mélanges selon les revendications précédentes, dans lesquels la base de greffe B.2 est choisie parmi au moins un caoutchouc du groupe constitué par les caoutchoucs diéniques, les caoutchoucs EP(D)M, les caoutchoucs d'acrylate, de polyuréthane, de silicone, de chloroprène, et d'éthylène/acétate de vinyle.

**11.** Mélanges selon les revendications précédentes contenant au moins un additif choisi dans le groupe des agents lubrifiants et des agents de démoulage, des agents de nucléation, des agents antistatiques, des stabilisants, des colorants et d+ es pigments.

**12.** Procédé de préparation de matières à mouler selon la revendication 1, dans lequel on mélange les composants A à F et éventuellement d'autres additifs et on forme un compound à l'état fondu.

**13.** Utilisation des matières à mouler selon les revendications 1 à 12 pour la préparation de corps moulés.

**14.** Corps moulés, susceptibles d'être obtenus à partir des matières à mouler selon les revendications 1 à 12.

**15.** Pièces de boîtier selon la revendication 14.